# DEMANDE DE BREVET EUROPEEN

(11) **EP 1 070 457 A1**
(43) Date de publication de la demande: **24.01.2001**
(21) Numéro de dépôt: 99202409.1
(22) Date de dépôt: 22.07.1999
(51) Int. Cl.: A23L 1/305

(54) **Composition soluble à base de germe de caroube**

(71) Demandeur: SOCIETE DES PRODUITS NESTLE S.A., 1800 Vevey (CH)
(72) Inventeur: Weber-Tripier, Nadine, 3454 Sumiswald (CH); Montagne, Dirk H., 3506 Grosshochstetten (CH)
(74) Mandataire: Vuille, Roman

(57) **Abrégé**

Composition soluble pour boisson non-allergènique à reconstituer, destinée à la nutrition infantile comprenant une source de protéines constituée de farine de germes de caroube ou d'un mélange de protéines de riz et de farine de germes de caroube, une source d'hydrates de carbone, une source de graisse et des additifs et le procédé d'obtention de cette composition soluble.

## Description

La présente invention a pour objet une composition soluble à base de germe de caroube, pour reconstituer une boisson non-allergènique destinée à la nutrition infantile.

### Etat de la technique

On connaît des "substituts de lait" à base de soja pour les enfants allergiques aux protéines contenues dans le lait. Ceux-ci ont une faible allergénicité mais possèdent un goût de "haricot" particulier au soja qui n'est pas toujours bien accepté par les enfants. De plus certains enfants peuvent encore être allergiques aux protéines de soja.

On peut utiliser également le riz pour préparer de tels substituts. Les compositions ainsi préparées sont acceptables sur le plan organoleptique mais le riz présente quelques inconvénients. D'une part une trop forte teneur en hydrates de carbone et d'autre part une trop faible teneur en protéines.

Ainsi de nombreux documents décrivent des compositions à base de riz utilisées comme substitut du lait. Les brevets US 4,894,242 et US 4744992 décrivent, par exemple, une méthode de préparation d'un lait de riz par hydrolyse enzymatique de l'amidon des grains de riz entiers.

Les germes de caroube sont également utilisés pour préparer de tels substituts, mais ils présentent un problème de solubilité. De ce fait on trouve sur le marché uniquement des produits sous forme de bouillies plus ou moins épaisses.

### Résumé

Un premier objet de l'invention est de proposer une composition pour boisson à reconstituer, destinée à remplacer le lait, et parfaitement miscible à de l'eau, utilisable dans la diète des nourrissons ayant une intolérance aux protéines de soja ou de lait.

A cet effet, la composition soluble selon l'invention comprend une source de protéines constituée de farine de germes de caroube ou d'un mélange de protéines de riz et de farine de germes de caroube, d'une source d'hydrates de carbone, d'une source de graisses et d'additifs tels que sels minéraux et vitamines.

Cette composition à base de farine de germes de caroube est parfaitement miscible à l'eau, la suspension obtenue est riche en protéines et hydrates de carbone et peut être utilisée comme lait de suite pour les bébés à partir de 6 mois.

La présente invention concerne également un procédé de préparation de cette composition soluble à base de protéines de riz et de germe de caroube qui consiste à préparer une soupe de farine de germes de caroube, la traiter thermiquement et y ajouter après refroidissement des additifs, on sèche alors le mélange puis on y ajoute des protéines de riz et des hydrates de carbone.

### Description détaillée

La composition selon l'invention est composée d'une source de protéines, une source d'hydrates de carbone et une source de graisse, ainsi que des additifs tels que sels minéraux, acides aminés et vitamines, par exemple.

Elle contient de préférence au moins 16% de protéines fournissant au moins 14% de l'énergie totale, de 16 à 20 % de graisse fournissant de 31% à 38% de l'énergie totale et 55 à 59 % d'hydrates de carbone fournissant de 48% à 51% de l'énergie totale et environ 3 % de sels minéraux.

La fraction protéique est composée de préférence de 80 à 100% de farine de germe de caroube pour au maximum environ 20 % de concentré de protéines de riz.

La farine de germe de caroube avec une teneur en protéines minimale de 50%, riche en lysine , mais pauvre en acides aminés soufrés (méthionine, cystéine et tryptophane) est une source de protéines potentiellement intéressante pour l'alimentation diététique. Cependant comme d'autres légumineuses telles que le soja, la présence de facteurs anti-nutritionnels (comme l'inhibiteur de la trypsine) requiert un traitement particulier.

Les protéines de riz peuvent être obtenues par filtration de farine de riz préalablement hydrolysée, par exemple. Avec une teneur en protéines minimale de 50%, ce concentré de riz peut être une source de protéines intéressante en comparaison avec la farine de riz (6% à 10% de protéines seulement). Un tel concentré de riz peut par exemple être obtenu par la méthode telle que décrite dans le brevet US 4,756,912, par exemple. L'utilisation de protéines de riz permet d'obtenir un profil en acides aminés intéressant sur le plan nutritionnel. L'ingrédient doit être de préférence non traité chimiquement de manière à pouvoir être utilisé dans des formules infantiles.

Les hydrates de carbones peuvent être apportés sous forme de sirop de glucose et/ou d'amidon de pomme de terre instantanné à faible teneur en protéines, par exemple. Ces hydrates de carbone permettent d'une part d'obtenir une composition ayant une densité calorique de 70 à 80 Kcal/100 g dans le produit reconstitué, mais ils contribuent également à ajuster la douceur du lait final. L'amidon de pomme de terre peut être utilisé pour augmenter la viscosité et la stabilité du produit final.

La graisse peut être constituée par un mélange de graisses végétales, par exemple. Ces graisses végétales sont de préférence des huiles de colza (à faible teneur en acide érucique), tournesol (à forte teneur en acide linoléique) et de palme oléine. Le ratio entre ces huiles ainsi que la quantité ajoutée sont calculées pour garantir une teneur en acide linoléique de préférence supérieure à 0.3 mg/100 Kcal et un ratio acide linoléique/ acide linolénique de préférence compris entre 8 et 15.

Le profil d'acides aminés peut être ajusté en ajoutant des acides aminés libres (forme L), pour se rapprocher de la composition du lait maternel. Notamment la farine de germes de caroube est déficiente en acides aminés soufrés (Méthionine,Cystéine et Tryptophane) et la combinaison avec le concentré de protéines de riz permet de compléter partiellement ces déficiences. De plus, il faut tenir compte des pertes dues au procédé de fabrication, notamment lors de traitement thermique et opération de séchage. Par exemple, une formule dont la fraction protéique est constituée à 80% de farine de germes de caroube et 20% de concentré de protéines de riz devra ainsi être supplémentée en Lysine, Methionine et Tryptophane. Tandis qu'une formule ne contenant pas de riz devra être supplémentée, par exemple, avec 4 acides aminés tels que Leucine, Lysine, Méthionine et Tryptophane. Ces supplémentations sont calculées de manière à ce que le profil d'acides aminés de la formule finale se rapproche de celui du lait maternel (selon la législation européenne). L'addition d'acides aminés est étroitement liée à la qualité des matières premières utilisées et peut notamment varier selon l'origine de la farine de germe de caroube.

Des sels minéraux, mais également des vitamines et des émulsifiants peuvent être ajoutés, selon les besoins. Les sels minéraux peuvent être ajoutés sous forme de citrate de potassium, citrate de calcium, chlorure de calcium, phosphate de sodium, phosphate de potassium, sulfate de zinc, sulfate de fer ou sulfate de cuivre. Les vitamines et minéraux peuvent représenter de 25 à 250% des apports journaliers recommandés. Dans le cas des formules infantiles, on ajoute les quantités de vitamines et minéraux prescrites par la Directive européenne.

La valeur énergétique de cette composition peut être comprise entre 460 et 500 kcal./ 100g. Pour les compositions plus particulièrement destinées à la nutrition infantile, les protéines peuvent représenter environ 0,5 à 1,3 g/100 kJ, les carbohydrates environ 1,7 à 3,4 g/100 kJ et les lipides environ 0,7 à 1,5 g/100 kJ, par exemple.

La composition selon la présente invention permet ainsi de préparer des substituts du lait maternel. Elle peut être utilisée comme lait de suite pour les bébés à partir de 6 mois. Elle est particulièrement destinée à la nutrition des enfants allergiques aux protéines de lait et/ou de soja.

Elle peut se présenter directement sous forme de boisson ou de concentré liquide, mais également sous forme d'une poudre que l'on peut reconstituer dans de l'eau. La poudre à une teneur en eau qui peut être comprise entre 2 et 3%. On peut par exemple dissoudre dans 100 ml d'eau à 50-55°C environ 15 à 18 g de cette composition en poudre, et de préférence environ 16 g. On obtient ainsi une boisson de couleur jaune claire, de faible viscosité, de texture lisse et onctueuse et dont la teneur énergétique peut être comprise entre 70 à 80 Kcal/100g. La solubilité de la composition est de préférence au minimum de 1.4 ml (méthode ADPI).

La composition selon la présente invention peut être préparée selon le procédé suivant :
a) on prépare une soupe de farine de germe de caroube
b) on traite thermiquement la soupe
c) et on ajoute après refroidissement la source de graisse, une partie des hydrates de carbone, et le cas échéant les acides aminés non thermosensibles et les sels minéraux,
d) puis on sèche le mélange
e) enfin on ajoute le reste des hydrates de carbone et le cas échéant les protéines de riz, les vitamines et les acides aminés thermosensibles.

Pour préparer la soupe de farine de germes de caroube, on peut utiliser de l'eau déminéralisée pour y mélanger ladite farine. La soupe a de préférence une teneur en solides comprise entre 10 et 15%.

La soupe est ensuite traitée thermiquement. Le traitement thermique peut consister en un préchauffage à 90-100°C, de préférence pendant une durée minimale de 30 minutes, à un pH d'environ 6.5-7. Cette étape permet de détruire l'inhibiteur de trypsine présent dans la farine de germes de caroube. En effet, ce facteur nutritionnel bloque l'action de la trypsine lors de la digestion. La réduction de la teneur en inhibiteur trypsique garantit une bonne digestibilité des protéines et par la suite une bonne croissance du bébé.

On peut ajouter alors après refroidissement la source de graisse, une partie des hydrates de carbone, et le cas échéant les acides aminés essentiels (sauf les acides aminés thermosensibles comme la Lysine, par exemple) et des sels minéraux.

Le mélange peut être alors séché. Le séchage peut être réalisé par atomisation, par exemple, jusqu'à une teneur en eau finale de préférence de l'ordre de 3%. On peut ajouter alors au mélange sec, les protéines de riz à raison de 5 à 10% en poids du mélange sec, les vitamines, et acides aminés thermosensibles si besoin.

Le procédé permet d'obtenir un produit à base de germe de caroube soluble, parfaitement miscible à l'eau (50-55°C). La composition soluble peut alors être utilisée pour préparer un "lait de suite" pour enfants allergiques aux protéines de lait ou de soja et au gluten.

La présente invention est décrite plus en détail ci-après à l'aide des exemples, donnés à titre d'illustration de l'objet de l'invention dont ils ne constituent en aucune manière une limitation. Les pourcentages sont donnés en poids sauf indication contraire.

### Exemples

### Exemple 1: composition soluble pour boisson substitut de lait.

On prépare un mélange contenant 43 kg de farine de germes de caroube dans 285 1 d'eau désionisée que l'on traite thermiquement. Le chauffage se fait par injection directe de vapeur à 90-100°C puis la soupe est maintenue à 90-100°C sous agitation constante dans une cuve thermostatée pendant 30 minutes minimum. On refroidit la préparation par expansion directe atmosphérique (flash cooling). On ajoute alors 17 kg d'un mélange de graisses végétales, constitué d'environ 50 % d'huile de palme, environ 20 % d'huile de noix de coco, 20 % d'huile de colza, 8 %d' huile de tournesol et de lécithine de tournesol.

On ajoute environ 18 kg d'une solution de sels minéraux contenant du, du citrate de potassium, du phosphate de potassium, du chlorure de calcium, du citrate de calcium, et de phosphate de potassium.

On ajoute également des carbohydrates et à raison de 46 kg de sirop de glucose, et des acides aminés sous forme de L-Tryptophane, L-Methionine ainsi que du Myo-inositol et bitartrate de choline.

Le mélange est alors concentré par évaporation et séché par atomisation jusqu'à une teneur en eau de 3 %. Puis on mélange à sec des protéines de riz et des carbohydrates. Pour obtenir 100 kg de produit fini, on mélange 9 kg de concentré de protéines de riz , 6 kg d'amidon de pomme de terre instantané, 18 kg de sirop de glucose à 66 kg dudit mélange séché. Sont également ajoutés à sec les vitamines , les éléments traces sous forme de sulfate de fer, zinc, cuivre ainsi que la L-Lysine.

Le produit obtenu est une poudre que l'on peut utiliser pour reconstituer une boisson servant de substitut du lait. Pour préparer une telle boisson on mélange environ 16 g de cette poudre à 100 ml d'eau. La boisson obtenue convient aux enfants intolérants aux protéines de lait, aux protéines de soja et gluten. Elle a une densité calorique de 74 kcal/100 ml.

### Exemple 2 : composition soluble pour boisson substitut de lait à base de farine de germes de caroube uniquement.

L'allergie aux protéines de riz est relativement fréquente au Japon mais pas en Europe. Bien que le riz soit généralement reconnu comme un aliment peu allergène, il semble que des bébés déjà allergiques aux protéines de lait et/ou de soya peuvent avoir également une réaction allergique au riz. C'est pour cela qu'un substitut de lait à base de farine de germes de caroube uniquement est également proposé.

On prépare un mélange contenant 31 kg de farine de germes de caroube dans 206 1 d'eau désionisée que l'on traite thermiquement. Le chauffage se fait par injection directe de vapeur à 90-100°C puis la soupe est maintenue à 90-100°C sous agitation constante dans une cuve thermostatée pendant 30 minutes minimum. On refroidit la préparation par expansion directe atmosphérique (flash cooling).

On ajoute alors 17 kg d'un mélange de graisses végétales, constitué d'environ 50% d'huile de palme, environ 20% d'huile de noix de coco, 20% d'huile de colza, 8%d' huile de tournesol et de lécithine de tournesol.

On ajoute également environ 18 kg d'une solution de sels minéraux contenant du, du citrate de potassium, du phosphate de potassium, du chlorure de calcium, du citrate de calcium, et de phosphate de potassium.

On ajoute également des carbohydrates et à raison de 40 kg de sirop de glucose, et des acides aminés sous forme de L-Tryptophane, L-Methionine, L-Leucine ainsi que du Myo-inositol et bitartrate de choline.

Le mélange est alors concentré par évaporation et séché par atomisation jusqu'à une teneur en eau de 3%. Puis on mélange à sec des carbohydrates. Pour obtenir 100 kg de produit fini, on mélange 6 kg d'amidon de pomme de terre instantané, 19 kg de sirop de glucose à 75 kg dudit mélange séché. Sont également ajoutés à sec les vitamines , les éléments traces sous forme de sulfate de fer, zinc, cuivre ainsi que la L-Lysine.

Le produit obtenu est une poudre que l'on peut utiliser pour reconstituer une boisson servant de substitut du lait. Pour préparer une telle boisson on mélange environ 16 g de cette poudre à 100 ml d'eau. La boisson obtenue convient aux enfants intolérants aux protéines de lait, aux protéines de soja et gluten. Elle a une densité calorique de 72 kcal/100 ml.

## Revendications

1. Composition non-allergénique soluble comprenant au moins une source de protéines constituée de farine de germes de caroube ou d'un mélange de protéines de riz et de farine de germes de caroube, d'une source d'hydrates de carbone, d'une source de graisse et des additifs.

2. Composition selon la revendication 1 contenant au moins 16 % de protéines, environ 55 à 59 % d'hydrates de carbone, environ 16 à 20 % de graisse et environ 3 % de sels minéraux et de vitamines.

3. Composition selon les revendications 1 ou 2, dans laquelle la source de protéines fournit au moins 14 % de l'énergie totale, les hydrates de carbone fournissent environ 48 à 51 % de l'énergie totale et la graisse fournit environ 31 à 38 % de l'énergie totale.

4. Composition selon l'une des revendications 1 à 3, dans laquelle la source de protéine comprend environ 80 à 100 % de farine de germes de caroube et jusqu'à environ 20 % de protéines de riz.

5. Composition selon l'une des revendications 1 à 4, dans laquelle la source d'hydrate de carbone est du sirop de glucose et/ou de l'amidon de pomme de terre.

6. Composition selon l'une des revendications 1 à 5, dans laquelle la source de graisse est un mélange de graisses végétales, et plus particulièrement d'huile de colza, tournesol et de palme oléine.

7. Composition selon l'une des revendications 1 à 6, dans laquelle les additifs sont des acides aminés, des vitamines et des sels minéraux.

8. Composition selon l'une des revendications 1 à 7, se présentant sous forme d'une poudre dont la solubilité est au minimum de 1,4 ml (méthode ADPI).

9. Utilisation d'une composition selon l'une des revendications 1 à 8 pour reconstituer un "lait de suite" à base de farine de germes de caroube pour enfants intolérants aux protéines de lait ou de soja ou au gluten.

10. Utilisation selon la revendication 9, dans laquelle la composition en poudre est mélangée à de l'eau à raison d'environ 15 à 18 g pour 100 ml de manière à obtenir une boisson dont la densité énergétique est d'environ 70 à 80 kcal/ 100 g.

11. Procédé de préparation d'une composition soluble selon l'une des revendications 1 à 8, dans lequel :
a) on prépare une soupe de farine de germe de caroube
b) on traite thermiquement la soupe
c) et on ajoute après refroidissement, la source de graisse, une partie des hydrates de carbone, et le cas échéant les acides aminés non thermosensibles et les sels minéraux,
d) puis on sèche le mélange,
e) enfin on ajoute le reste des hydrates de carbone et le cas échéant les protéines de riz, les vitamines et les acides aminés thermosensibles.

12. Procédé selon la revendication 11, dans lequel le traitement thermique consiste en un chauffage à 90-100°C pendant 30 minutes au minimum sous agitation constante.

13. Procédé selon les revendications 11 ou 12, dans lequel le séchage est réalisé par atomisation, jusqu'à une teneur en eau finale au maximum d'environ 3%.
